## Europäisches Patentamt
## European Patent Office
## Office européen des brevets

(19)

(11) Veröffentlichungsnummer: **0 185 984 B1**

(12) # EUROPÄISCHE PATENTSCHRIFT

(45) Veröffentlichungstag der Patentschrift: 03.04.91

(51) Int. Cl.5: **B29C 45/82**

(21) Anmeldenummer: 85115355.1

(22) Anmeldetag: 04.12.85

(54) **Hydraulikeinrichtung für die Spritzgiesseinheit einer Kunststoff-Spritzgiessmaschine.**

(30) Priorität: 28.12.84 DE 3447605

(43) Veröffentlichungstag der Anmeldung:
02.07.86 Patentblatt 86/27

(45) Bekanntmachung des Hinweises auf die
Patenterteilung:
03.04.91 Patentblatt 91/14

(84) Benannte Vertragsstaaten:
**AT CH DE FR GB IT LI NL**

(56) Entgegenhaltungen:
**DE-A- 1 550 063**
**FR-A- 2 506 041**

**PLASTICS ENGINEERING, Band 33, Nr. 4,
April 1977, Seiten 26-30; M. DAVIS:
"Processing plastics-servocontrolled injection molding"**

**ÖLHYDRAULIK UND PNEUMATIK, Band 18,
Nr. 4, April 1974, Seiten 270-273; K. BEHRENS
et al.: "Proportionalregelventileverbessern
Spritzgiessautomaten"**

**O + P ÖLHYDRAULIK UND PNEUMATIK, Band
24, Nr. 12, 1980, Seiten 901-904, Mainz, DE; R.
EWALD: "Steuerungen für moderne Kunst-**
**stoffverarbeitungsmaschinen"**

(73) Patentinhaber: **Hehl, Karl
Arthur-Hehl-Strasse 32
W-7298 Lossburg 1(DE)**

(72) Erfinder: **Hehl, Karl
Arthur-Hehl-Strasse 32
W-7298 Lossburg 1(DE)**

(74) Vertreter: **Mayer, Friedrich Dr. et al
Westliche 24
W-7530 Pforzheim(DE)**

## Beschreibung

Die Erfindung bezieht sich auf eine Hydraulikeinrichtung für die Spritzgießeinheit einer Kunststoff-Spritzgießmaschine, mit einer die hydraulischen Verbraucher der Spritzgießeinheit über wenigstens eine Versorgungsleitung mit Drucköl speisenden Regelpumpe und mit einer in der Verbraucherleitung angeordneten Regeleinheit, die ein Proportionalmengen/druckventil und einen Druckfühler zur druckabhängigen Regelung (Druckprogrammregelung) aufweist und der eine Steuerrückleitung zugeordnet ist, die das Regelorgan der Regelpumpe mit der Versorgungsleitung nach dem Proportionalmengen/druckventil zwecks Aufrechterhaltung eines konstanten Betriebsdruckgefälles verbindet.

Unter dem Begriff "Betriebs-Druckgefälle" im Sinne des Oberbegriffes wird ein Druckgefälle verstanden, das als Grundlage für den Betrieb und die Steuerung der Regelpumpe gerade noch ausreichend ist, also an einer unteren Grenze liegt.

Bei einer bekannten Hydraulikeinrichtung dieser Art (DE-PS 31 19 095) ergeben sich im Vergleich zu bisherigen hydraulischen System auf der Grundlage eines einzigen Proportionalmengen/druckventils in einer Verbraucherleitung zu mehreren Verbrauchern sehr vielfältige Anpassungmöglichkeiten an unterschiedliche Betriebserfordernisse bei Aufrechterhaltung einer minimalen Antriebsleistung.

Hiervon ausgehend liegt der Erfindung die Aufgabe zugrunde eine Hydraulikeinrichtung der eingangs genannten Art derart weiterzubilden, daß der Ablauf insbesondere des Einspritzvorganges in noch höherem Grade an die durch Wechsel des Herstellungsobjektes sich ändernden, zum Teil extrem unterschiedlichen Betriebserfordernisse angepaßt und beschleunigt werden kann.

Diese Aufgabe wird dadurch gelöst, daß der ersten Regeleinheit eine zweite Regeleinheit hinsichtlich ihres Regelverhaltens nachgeschaltet , indem die Regelgeschwindigkeit der zweiten Regeleinheit von der Höhe der Betriebsdruckgefälls der ersten Regeleinheit bestimmt ist, welche zweite Regeleinheit ist, ein Proportionalmengen/druckventil, einen Druckfühler zur druckabhängigen nalmengen/druckventil, einen Druckfühler zur druckabhängigen Regelung sowie einen Streckenspannungswandler zur wegabhängigen Regelung (Mengenprogrammregelung) umfaßt.

Das funktionelle Zusammenspiel der ersten und zweiten Regeleinheit im hydraulischen System schafft die grundsätzlichen Voraussetzungen dafür, daß die Einspritzung des Kunststoffmaterials in die Spritzgießform und gegebenenfalls auch das Auf- und Absetzen der Spritzgießeinheit auf die Spritzgießform durch einfache zusätzliche Maßnahmen beschleunigt werden kann.

Dies geschieht im einfachsten Falle durch eine Programmierung des Betriebsdruckgefälls über den Druckfühler der ersten Regeleinheit. Dadurch wird das zunächst für eine Energieeinsparung konzipierte Betriebsdruckgefälle zum Hilfsmittel für eine Steigerung der Schaltgeschwindigkeit des Proportionalmengen/druckventils der zweiten Regeleinheit, weil die durch ein höheres Betriebsdruckgefälle erhöhte Fördergeschwindigkeit kleinere Durchflußquerschnitte im Proportionalmengen/druckventil der zweiten Regeleinheit erlaubt und somit zu kürzeren Schaltwegen führt. Eine höhere Reaktionsgeschwindigkeit des Proportionalmegen/druckventils der zweiten Regeleinheit ist von besonderer Bedeutung bei einem differenzierten Ablauf des Einspritzvorganges mit mehreren Geschwindigkeitsstufen bzw. Druckstufen. Die zweite Regeleinheit ist der ersten Regeleinheit somit nicht hydraulisch sondern hinsichtlich ihres Regelverhaltens nachgeschaltet, weil die Regelgeschwindigkeit der zweiten Regeleinheit von der Höhe des Betriebsdruckgefälles der ersten Regeleinheit bestimmt ist.

Eine weitere höchst wirkungsvolle Maßnahme zur Beschleunigung der Einspritzung des Kunststoffmaterials ergibt sich aus Patentanspruch 2 und 3. Danach kann der Speicher bei einem über die erste Regeleinheit optimierten Betriebsdruckgefälle während des Einspritzens und während der Nachdruckphase nachgeladen werden.

Eine weitere, extrem einfache Maßnahme zur Beschleunigung der Einspritzung des Kunststoffmaterials, die zudem eine genauere Regelung des Staudrucks bei der Vorplastifizierung ermöglicht, ist aus Patentanspruch 4 ersichtlich. Durch die Verbindung der Zylinderräume und Einspritzzylinder und Rückfahrzylinder ergibt sich ein, in Differenzschaltung befindliches hydraulisches System. In diesem ist die wirksam beaufschlagte Fläche wesentlich verringert. Im Falle der Einspritzung bedeutet dies eine Beschleunigung des Einspritzhubes der Förderschnecke. Im Falle der Staudruckregelung wird in dem den Staudruck regelnden Proportionalmengen/druckventil ein höherer Staudruck erzeugt. Die ist gleichbedeutend mit der Möglichkeit einer erheblichen Vergrößerung der Druckregelskala für den Staudruck. Dadurch kann der Staudruck differenzierter und exakter geregelt werden.

Weitere Anpassungsmöglichkeiten an unterschiedliche Betriebserfordernisse ergeben sich aus den Patentansprüchen 4 bis 7.

Nachstehend wird die Erfindung anhand der Zeichnung an zwei Ausführungsbeispielen erläutert.

Es zeigen:

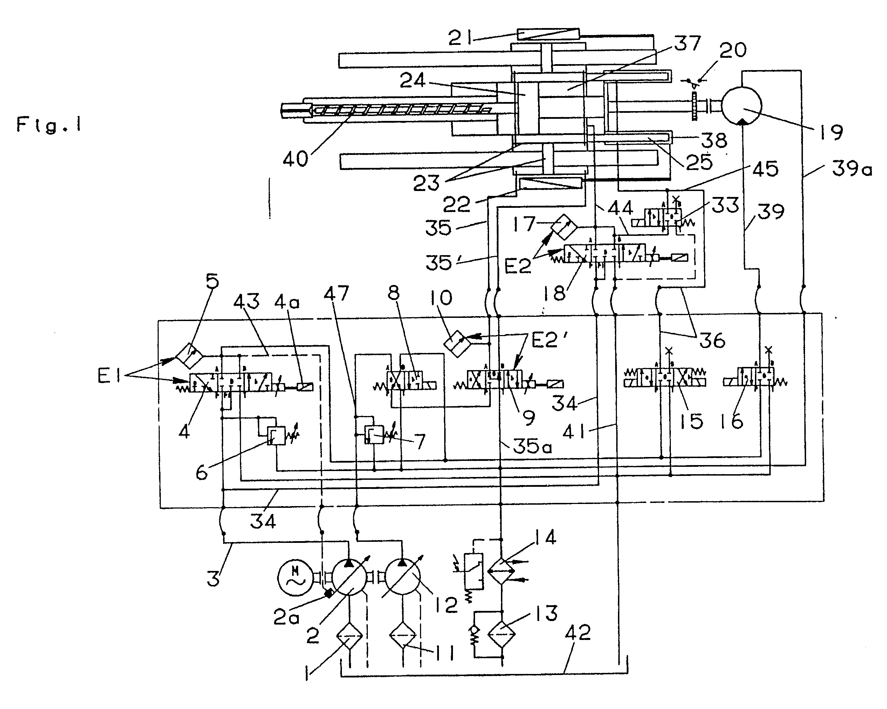

Fig. 1   das hydraulische System der Hydraulikeinrichtung und

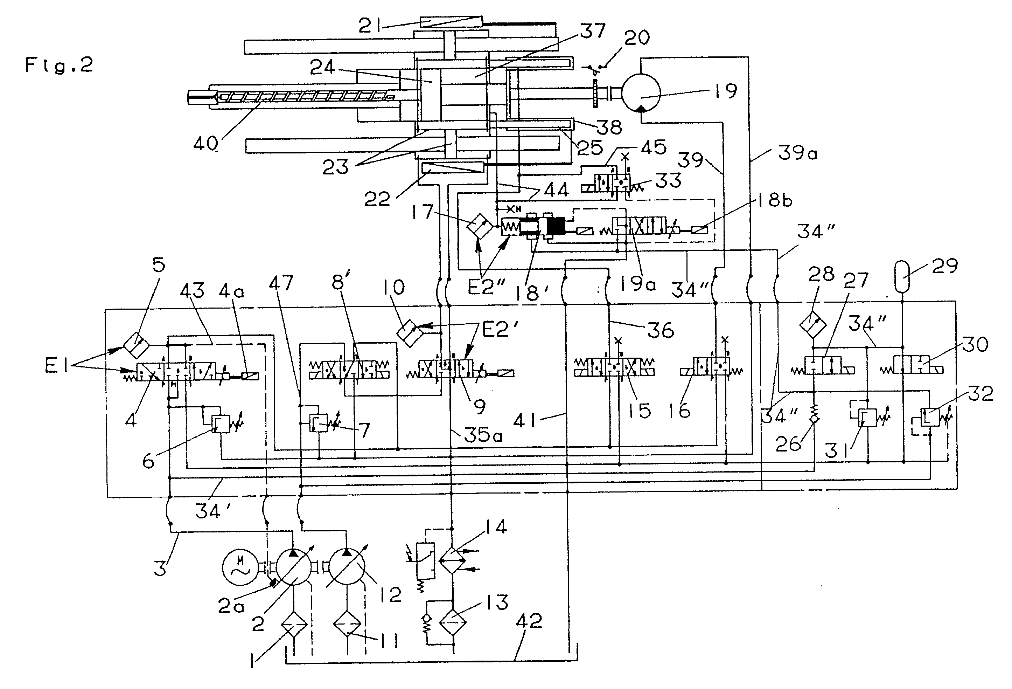

Fig. 2   das System gemäß Fig. 1 mit hydraulischem Speicher.

Durch die Hydraulikeinrichtung ist neben dem Auf- und Absetzen der Spritzgießeinheit auf die bzw. von der Spritzgießform, die Vorplastifizierung und das Einspritzen des Kunststoffmaterials in die Spritzgießform sowie das Rückfahren der Förderschnecke im Plastifizierzylinder regelbar. Letzteres dient einem Druckabbau im Plastifizierzylinder vor dem Absetzen der Spritzgießeinheit von der Spritzgießform. Vielfach ist es aber auch erforderlich, die Förderschnecke für Zwecke des Ausbaues bzw. zur Reinigung und dergleichen zurückzufahren. Hydraulische Verbraucher der spritzgießeinheit werden über Versorgungsleitungen von einer Regelpumpe 2 relativ großer Förderleistung oder einer Regelpumpe geringerer Förderleistung (Druckhaltepumpe 12) Mit Drucköl versorgt. Von der Regelpumpe 2, die das Drucköl über ein Saugfilter 1 aus dem Tank 42 ansaugt, führt eine Verbraucherleitung 3 mit Druckbegrenzungsventil 6 zu einer ersten Regeleinheit E 1, die ein Proportionalmengen/druckventil 4 und einen Druckfühler 5 zur druckabhängigen Regelung (Druckprogrammregelung) umfaßt. Diese erste Regeleinheit E1 ist mit einer Steuerrückleitung 43 versehen, die das Regelorgan 2a der Regelpumpe 2 mit der Verbraucherleitung 3 nach dem proportionalen Mengen/Druckventil 4 zwecks Aufrechterhaltung eines konstanten Betriebsdruckgefälles verbindet.

Die erste Regeleinheit E1 wirkt mit einer zweiten, der ersten Regeleinheit E1 entsprechenden Regeleinheit E2 bzw. E2" zusammen, der ein Streckenspannungswandler 22 zur wegabhängigen Regelung zugeordnet ist. Für das Einspritzen des Kunststoffmaterials kann zwischen der ersten Regeleinheit E1 und der zweiten Regeleinheit E2 ein hydraulischer Speicher 29 mit Druckaufnehmer 28 bedarfsweise mittels Wegeventil 27 eingefügt werden. Die Zylinderräume 37 und 38 der das Vorwärtsfahren (Einspritzen des Kunststoffmaterials) und das Rückfahren der Förderschnecke 40 bewirkenden Kolben-Zylinder-Einheiten (Einspritzzylinder 24 und Rückfahrzylinder 25) sind mittels Wegeventil 33 miteinander verbindbar. Der Regeleinheit E1 ist sowohl in der Versorgungsleitung 35 zur Kolben-Zylinder-Einheit (Fahrzylinder 23) für das Auf- und Absetzen der Spritzgießeinheit als auch in der zum Einspritzzylinder 24 führenden Versorgungsleitung 34 die zweite Regeleinheit E2 bzw. E2" und in der zum Fahrzylinder 25 führenden Versorgungsleitung 36 ein Wegeventil 15 regelungstechnisch nachgeschaltet. In der zum Rotations-Ölmotor 19 für die Förderschnecke 40 führenden Versorgungsleitung 39 ist der Regeleinheit E1 ein Wegeventil 16 nachgeschaltet. Durch die Druckhaltepumpe 12 ist der Fahrzylinder 23 über ein Umsteuerventil 8 sowie über die erste Regeleinheit E1 speisbar.

Der hydraulische Speicher 29 kann während der Einspritzung des plastischen Materials und während der sich anschließenden Nachdruckphase zum Nachdrücken des plastischen Materials in die Spritzgießforn wahlweise von der Regelpumpe 2 über Regeleinheit E1 und Wegeventil 27 oder aber von der Druckhaltepumpe 12 über das Druckzuschaltventil 32 und das Wegeventil 27 oder gleichzeitig von der Regelpumpe 2 und der Druckhaltepumpe 12 nachgeladen werden.

Alle Geschwindigkeiten und Drücke des hydraulischen Systems können im geschlossenen Regelkreis bei kleinstmöglicher Energieaufnahme und geringem Aufwand an hydraulischen Komponenten gefahren werden.

Im folgenden wird der Aufbau der Steuervorrichtung im einzelnen am Ablauf eines Spritzzyklus beschrieben.

1. Erstes Ausführungsbeispiel einer Steuerung in der Phase des Auf- bzw. Absetzens der Spritzgießeinheit auf die und von der Spritzgießform.

Die Regeleinheit E2' mit dem Proportionalmengen/druckventil 9 und dem Druckfühler 10 arbeitet als Schaltventil. Geschwindigkeit und Druck werden durch die Regeleinheit E1 mit dem Proportionalmengen/druckventil 4 und dem Druckfühler 5 bestimmt.

Dank der Rückfürleitung 43 wird von dieser Regeleinheit E1 ein konstantes Betriebsdruckgefälle aufrechterhalten. Bei Geschwindigkeitsregelung erfolgt eine Rückführung über den als Wegaufnehmer arbeitenden Streckenspannungswandler 21. Wahlweise kann die Geschwindigkeit aber auch gesteuert werden, indem das Proportionalmengen/druckventil 4 der Regeleinheit E1 auf eine vorgegebene geometrische Größe aufgesteuert wird. Dabei wird der Verschiebeweg des Ventilkolbens von einem Wegaufnehmer erfaßt und als Ist-Wert auf den Soll-Wert zurückgeführt. Bei Erreichen eines im Programm vorgegebenen Druckwertes während der Fahrbewegung wird auf eine Druckregelung übergegangen. Der Druck-Istwert wird vom Druckaufnehmer 5 erfaßt und dem elektrischen Verstärker zugeführt. Ist die programmgemäße Düsenanlageposition mit Hilfe des Streckenspannungswandlers 21 und zugleich der programmgemäße Düsenanlagedruck mit Hilfe der Druckfühler 5 und 10 (als Kontrolle) erreicht, so geschieht folgendes: ein Wegeventil 8, welches der in diesem Zusammenhang als Schaltventil arbeitenden Regeleinheit E2' vorgeschaltet ist, wird auf 'Düse anlegen' geschaltet. Dadurch wird die Regelpumpe 2 durch die Regeleinheit E1 zu Null gesteuert. Gleichzeitig arbeitet das Proportionalmengen/druckventil 9 der Regeleinheit E2' als Druckregelventil. Der Druck-Istwert wird vom Druckaufnehmer 10 erfaßt und auf dem elektrischen Verstärker zurückgeführt. Letzterer ist befähigt, einen Soll-Ist-Vergleich zu machen. Über den Wegaufnehmer 21 erfolgt also sowohl die Geschwindigkeitsrückführung als auch die Wegpositionierung.

2. Zweites Ausführungsbeispiel einer Steuerung in der Phase des Auf- bzw. Absetzens der Spritzgießeinheit:

Geschwindigkeitsregelung, Druckregelung und Positionierung erfolgen mit Hilfe des Proportionalmengen/druckventils 9 der Regeleinheit E2'. Dabei kann sowohl die Regelpumpe 2 als auch die Druckhaltepumpe 12 zur Drucköiversorgung verwendet werden.

Aus diesem Grunde sind bei Betrieb einer Regelpumpe Parallelfunktionen mit der anderen Regelpumpe möglich. Für die Geschwindigkeitsregelung und die Positionierung der Düse an der Spritzgießform werden die Ist-Werte mit Hilfe des Streckenspannungswandlers 21 auf die Soll-Werte zurückgeführt. Für die Druckregelung wird der Druck-Ist-Wert vom Druckaufnehmer 10 erfaßt und zurückgeführt. Der Steuerkolben des Proportionalmengen/ druckventils 9 ist so gestaltet, daß über den Wegaufnehmer 21 sowohl ein Positionieren als auch ein 'Stehenlassen' der Düse ohne Lageregelung möglich ist, wobei das Proportionalmengen/ druckventil 9 schießt. In der von der Druckhaltepumpe 12 zur Regeleinheit E2' führenden Druckleitung 47 ist ein Druckbegrenzungsventil 7 eingefügt.

3. Vorplastifizierung (Dosieren)

In diese Phase weicht die rotierende Förderschnecke 40 unter dem Staudruck des sich vor ihr ansammelnden plastischen Materials zurück. Die Förderschnecke 40 wird durch den über die Versorgungsleitung 39 gespeisten Ölmotor 19 angetrieben. Dies geschieht mit Hilfe der Regeleinheit E1 über das Wegeventil 16. Die erforderlichen Drehzahlen der Förderschnecke 40 können wahlweise über das Proportionalmengen/druckventil 4 der Regeleinheit E1 geregelt oder aber gesteuert werden. Bei Drehzahlregelung erfolgt die Rückführung der Impulse vom induktiven Näherungsschalter 20 als Istwert auf den Verstärker. Eine Steuerung der Drehzahl geschieht durch ein Aufsteuern des Proportionalmengen/druckventils 4 auf eine dem Durchfluß entsprechende geometrische Größe. Dabei wird der Verschiebeweg des Ventilkolbens von dem Wegaufnehmer 4a erfaßt und als Ist-Wert auf den elektronischen Verstärker zurückgeführt. Bei Erreichen eines vorgegebenen zulässigen maximalen Drehmoments der Förderschnecke 40, das als Druckwert vom Druckaufnehmer 5 gemessen wird, wird der Druck-Ist-Wert zurückgeführt. Das Drehen der Förderschnecke 40 erfolgt dann druckgeregelt. Die Tankleitung 39a des Ölmotors 19 führt über den Ölkühler 14 und das Rücklauffilter 13. Der Staudruck in dem sich vor der Förderschnecke ansammelnden plastischen Material wird über das Proportionalmengen/druckventil 18 der Regeleinheit E2 geregelt. Dabei wird der Druck-Ist-Wert vom Druckaufnehmer 17 erfaßt und zurückgeführt. Die Zylinderräume 38 der Rückfahrzylinder 25 sind von einem Wegeventil 15, Schaltstellung A zu T, mit dem Tank 42 verbunden, so daß in die Zylinderräume 38 Drucköl aus dem Tank 42 nachgesaugt werden kann. Der Zylinderraum 37 wird über die Tankleitung 41 entleert.

Die Staudruckregelung kann aber auch wahlweise in anderer Art und Weise durchgeführt werden, wenn eine extrem differenzierte bzw. genaue Regelung erforderlich ist. In diesem Falle wird zwar der Staudruck ebenfalls über das Proportionalmengen/druckventil 18 geregelt und der Druck-Ist-Wert vom Druckaufnehmer 17 erfaßt und zurückgeführt. Im Unterschied zu der oben beschriebenen Staudruckregelung wird jedoch der Zylinderraum 37 des Einspritzzylinders 25 über Leitungen 44,45 mittels Wegeventil 33, mit den Zylinderräumen 38 der Rückfahrzylinder 25 verbunden. Das Wegeventil 15 befindet sich in Sperrstellung, weil bei dieser Beschaltung während der Plastifizierung kein Drucköl in die Zylinderräume 38 nachgesaugt zu werden braucht.

Durch die Verbindung der Zylinderräume 38 mit dem Zylinderraum 37 ergibt sich eine Differenzschaltung mit der Folge, daß die im System beaufschlagte wirksame Fläche wesentlich kleiner ist. Dadurch steht am Proportionalmengen/druckventil 8 ein höherer Druck an. Dadurch ist es möglich, den Staudruck über eine wesentlich größere Druckregelskala, das heißt noch genauer, zu regeln.

4. Einspritzen des Kunststoffmaterials in die Spritzgießform:

Einspritzgeschwindigkeit und Einspritzdruck werden über das Proportionalmengen/druckventil 18 der Regeleinheit E2 geregelt.

Der Geschwindigkeits-Ist-Wert sowie der Lage-Ist-Wert der Förderschnecke 40 wird über den als Wegaufnehmer arbeitenden Streckenspannungswandler 22 zurückgeführt. Der Druck-Ist-Wert wird durch den Druckaufnehmer 17 zurückgeführt. Das Betriebsdruckgefälle, also das Druckgefälle von der Regelpumpe 2 bis zum Druckaufnehmer 17, ist frei wählbar. Dabei ist das Proportionalmengen/druckventil 4 der Regeleinheit E1 soweit geöffnet, daß eine Regelung des Betriebsdruckgefälles über die Steuerrückleitung 43 möglich ist. Insoweit dient die Regeleinheit E1 zur Regelung eines optimierten Betriebsdruckgefälles während des Einspritzvorganges und während der Nachdruckphase.

Zur Regelung der Einspritzung arbeitet zwischen dem Einspritzzylinder 24 und der Regelpumpe 2 nur ein einziges Proportionalmengen/druckventil 18 wodurch eine optimale Energieausnutzung sichergestellt ist.

Die Regeleinheit E2 ist unmittelbar am Plastifizierzylinder der Spritzgießeinheit angeordnet, so daß sich extrem kurze Versorgungsleitungen ergeben, was die Regelgenauigkeit erhöht. Während des Einspritzvorganges sind die Zylinderräume 38 der Rückfahrzylinder 25 über das Wegeventil 15, mit dem Tank 42 verbunden.

Kommt es auf eine extrem große Einspritzgeschwindigkeit an, so kann das Einspritzen auch noch auf eine andere Art durchgeführt werden:

Die Innenräume 38 der Rückfahrzylinder 25 werden über die Leitungen 45,44 mit dem Zylinderraum 37 des Einspritzzylinders 25 mittels Wegeventil 33 miteinander verbunden. Das Wegeventil 15 ist dabei in Sperrstellung. Auf diese Weise kann bei gleicher Pumpenförderleistung eine größere Einspritzgeschwindigkeit erreicht werden.

5. Zurückfahren der Forderschnecke bzw. Abbau des Staudruckes im Plastifizierzylinder.

Das Zurückfahren der Förderschnecke 40 wird durch Schalten des in der Versorgungsleitung 35 befindlichen Wegeventils 15, Schaltstellung P zu A, eingeleitet. Dabei befindet sich das Proportionalmengen/druckventil 18 der Regeleinheit E2 in Schaltstellung A zu T. Geschwindigkeit und Druck werden durch das Proportionalmengen/druckventil 4 der Regeleinheit E1 bestimmt.

Auch hier kann die Geschwindigkeit wahlweise gesteuert oder geregelt gefahren werden. Bei Erreichen eines vorgegebenen Druckwertes, der über den Druckaufnehmer 5 gemessen wird, erfolgt eine Druckregelung.

6. Einspritzen des vorplastifizierten Kunststoffmaterials mit hydraulischem Speicher.

Ist ein extrem schnelles Einspritzen des plastischen Materials erforderlich, so wird der in der Versorgungsleitung zwischen den Regeleinheiten E1 und E2' über das Wegeventil 27 einfügbare hydraulische Speicher 29 eingesetzt. Die Ölentnahme erfolgt dabei ausschließlich vom hydraulischen Speicher 29, der über die Druckleitungen 34",44 mittels Proportionalmengen/druckventil 18' mit dem Einspritzzylinder 24 verbindbar ist. Dadurch ist bereits ein Laden des Speichers 29 während des Einspritzprozesses sowie während der Nachdruckphase möglich. Das Laden des hydraulischen Speichers 29 kann über Rückschlagventil 26 und Wegeventil 27 durch die Regelpumpe 2, wahlweise aber auch durch die Haltepumpe 12 über das Wegeventil 8' und über das Druckzuschalteventil 32 erfolgen. Im Falle eines Ladens durch die Regelpumpe 2 ist das Druckgefälle zum Speicher 29 über den Druckfühler 5 frei wählbar. Der Ladedruck des Speichers 29, der über den Druckaufnehmer 28 gemessen wird, kann stets dem konkreten Verbrauch angepaßt werden. Es wird also in jedem Fall nur soviel Drucköl in den Speicher 29 geladen, wie für den nächsten Einspritzvorgang benötigt wird. Um die erforderlichen großen Ölmengen zu regeln, ist in der Regeleinheit E2" ein vorgesteuertes Proportionalmengen/druckventil 19a vorgesehen. Das Vorsteuerventil 19a ist mit einem Wegaufnehmer 18b versehen. Eine Feder 18c stellt sicher, daß der Kolben im Proportionalmengen/druckventil 18 nicht 'irrt'. Die Feder 18c verschiebt den Kolben zwecks Erzeugung des erforderlichen Steueröldruckes nach rechts. Der Speicher 29 ist durch das Druckbegrenzungsventil 31 gesichert und durch das Wegeventil 30 entlastbar. Die Druckleitung 34" des Speichers 29 führt in jedem Falle über das Wegeventil 27.

Der Begriff "Proportionalmengen/druckventil" ist in weitem Sinne zu verstehen und umfaßt auch Servoventile.

**Ansprüche**

1. Hydraulikeinrichtung für die Spritzgießeinheit einer Kunststoff-Spritzgießmaschine, mit einer die hydraulischen Verbraucher (24,23) Spritzgießeinheit über wenigstens eine Versorungungs leitung (34,35) mit Drucköl speisenden Regelpumpe (2) und mit einer in der Vesorgungsleitung (34,35) angeordneten Regeleinheit (E1), die ein Proportionalmengen/druckventil (4) und einen Druckfühler (5) zur druckabhängigen Regelung (Druckprogrammregelung) aufweist, und der eine Steuerrückleitung (43) zugeordnet ist, die das Regelorgan (2a) Regelpumpe (2) mit der sorgungsleitung nach dem Proportionalmengen/druckventil (4) zwecks Aufrechterhaltung eines konstanten Betriebsdruckgefälles verbindet, dadurch gekennzeichnet, daß der ersten Regeleinheit (E1) eine zweite Regeleinheit (E2,E2"), hilisichtlich ihres Regelverhaltens nachgeschaltet ist, indem die Regelgeschwindigkeit der zweiten Regeleinheit (E2,E2") von der Höhe der Betriebsdruckgefälles der ersten Regeleinheit (E1) bestimmt ist welche zweite Regeleinheit (E1,E2") ein Proportionalmengen/druckventil (18,18'), einen Druckfühler (17) zur druckabhängigen Regelung (Druckprogrammregelung) sowie einen Streckenspannungswandler (22) zur wegabhängigen Regelung (Mengenprogrammregelung) umfaßt.

2. Einrichtung nach Patentanspruch 1, dadurch gekennzeichnet, daß zwischen der über die steuerrückleitung (43) mit der Regelpumpe (2) verbundenen ersten Regeleinheit (E1) und der zweiten Regeleinheit (E2) ein hydraulischer Speicher (29) mit Druckaufnehmer (28) bedarfsweise mittels eines Wegeventils (27) einfügbar ist.

3. Einrichtung nach einem der Patentansprüche 1 oder 2, dadurch gekennzeichnet, daß die Zylinderräume (37,38) der das Vorwärtsfahren (Einspritzen des Kunststoffmaterials) und das Rückfahren der Förderschnecke (40) bewirkenden Kolben-Zylinder-Einheiten (Einspritzzylinder 24; Rückfahrzylinder 25) mittels eines wegeventils (33) miteinander verbindbar sind.

4. Einrichtung nach einem der vorhergehenden Patentansprüche, dadurch gekennzeichnet, daß der Regeleinheit (E1) sowohl in der Versorgungsleitung (35) zur Kolben-Zylinder-Einheit (Fahrzylinder 23) für das Auf- und Absetzen der Spritzgießeinheit, als auch in der zum Einspritzzylinder (24) führenden Versorgungsleitung (34) eine zweite Regeleinheit (E2',E2, E") und in der zum Rückfahrzylinder (25) führenden Versorgungsleitung (36) ein Wegeventil (15) nachgeschaltet ist.

5. Einrichtung nach einem der vorhergehenden Patentansprüche, dadurch gekennzeichnet, daß der Regeleinheit (E1) in der zum Ölmotor (19) für die Förderschnecke (40) führenden Versorgungsleitung (39) ein Wegeventil (16) nachgeschaltet ist.

6. Steurvorrichtung nach einem der vorhergehenden Patentansprüche dadurch gekennzeichnet, daß eine zusätzliche Regelpumpe geringerer Förderleistung (Druckhaltepumpe 12) vorgesehen ist, durch welche der Fahrzylinder (23) über ein Umsteuerventil (8) und die zweite Regeleinheit (E2') speisbar ist.

7. Einrichtung nach einem der vorhergehenden Patentansprüche, dadurch gekennzeichnet, daß das Auf- und Absetzen der Spritzgießeinheit wahlweise durch die erste (E1) oder die zweite Regeleinheit (E2') regelbar ist und daß im Falle der Regelung durch die zweite Regeleinheit (E2') der Fahrzylinder (23) wahlweise durch die Regelpumpe (2) oder die Druckhaltepumpe (12) speisbar ist.

8. Einrichtung nach einem der vorhergehenden Patentansprüche, dadurch gekennzeichnet, daß der hydraulische Speicher (29) während der Einspritzung des plastischen Materials und der sich anschließenden Nachdruckphase zum Nachdrücken des plastischen Materials in die Spritzgießform wahlweise von der Regelpumpe (2) über die erste Regeleinheit (E1) und das Wegeventil (27) oder von einer Druckhaltepumpe (12) über ein Druckzuschalteventil (32) oder gleichzeitig von der Regelpumpe (2) und der Druckhaltepumpe (12) nachladbar ist.

## Claims

1. Hydraulic arrangement for the injection moulding unit of a plastics material injection moulding machine, including a variable delivery pump (2), which feeds the hydraulic consumer apparatus (24, 23) of the injection moulding unit with pressure oil via at least one supply line (34; 35), and including a control unit (E1), which is disposed in the supply line (34; 35) and comprises a proportional pressure/quantity valve (4) and a pressure sensor (5) for the pressure-dependent control (pressure programme control), said control unit having associated therewith a control feedback line (43), which connects the control member (2a) of the variable delivery pump (2) to the supply line upstream of the proportional pressure/ quantity valve (4) in order to maintain a constant operational pressure gradient, characterised in that a second control unit (E2, E2") is connected to the output end of the first control unit (E1) in respect of its control behaviour, while the control speed of the second control unit (E2, E2") is determined by the magnitude of the operational pressure gradient of the first control unit (E1), which second control unit (E2, E2") includes a proportional pressure/quantity valve (18, 18'), a pressure sensor (17) for pressure-dependent control (pressure programme control) and a displacement-to-voltage converter (22) for the travel-dependent control (quantity programme control).

2. Arrangement according to claim 1, characterised in that a hydraulic accumulator (29), with pressure sensor (28), is insertable between the first control unit (E1), which is connected to the variable delivery pump (2) via the control feedback line (43), and the second control unit (E2) by means of a directional valve (27), if necessary.

3. Arrangement according to one of claims 1 or 2, characterised in that the cylinder chambers (37, 38) of the piston-and-cylinder units (injection cylinder 24; return travel cylinder 25), which effect the forward movement (injection of the plastics material) and the return movement of the conveyor screw (40), are interconnectable by means of a directional valve (33).

4. Arrangement according to one of the preceding claims, characterised in that a second control unit (E2', E2, E'') is connected to the output end of the control unit (E1) both in the supply line (35) leading to the piston-and-cylinder unit (travel cylinder 23) and in the supply line (34) leading to the injection cylinder (24), and a directional valve (15) is connected to the output end thereof in the supply line (36) leading to the return travel cylinder (25).

5. Arrangement according to one of the preceding claims, characterised in that a directional valve (16) is connected to the output end of the control unit (E1) in the supply line (39), which leads to the hydraulic motor (19) for the conveyor screw (40).

6. Control device according to one of the preceding claims, characterised in that an additional variable delivery pump with a low delivery output (pressure maintenance pump 12) is provided, by means of which the travel cylinder (23) is feedable via a reversing valve (80 and the second control unit (E2').

7. Arrangement according to one of the preceding claims, characterised in that the mounting and lowering of the injection moulding unit is selectively controllable by the first control unit (E1) or the second control unit (E2'), and in that, in the case where the control is effected by the second control unit E2'), the travel cylinder (23) is selectively feedable by the variable delivery pump (2) or the pressure maintenance pump (12).

8. Arrangement according to one of the preceding claims, characterised in that the hydraulic accumulator (29) is selectively rechargeable during the injection-moulding of the plastic material and during the subsequent re-pressing phase for subsequently pressing the plastic material into the injection mould assembly by the variable delivery pump (2) via the first control unit (E1) and the directional valve (27) or by a pressure maintenance pump (12) via a pressure cut-off valve (32) or simultaneously by the variable delivery pump (2) and the pressure maintenance pump (12).

**Revendications**

1. Dispositif hydraulique pour le groupe d'injection d'une machine de moulage de matières plastiques par injection, comprenant une pompe régulatrice (2) qui alimente en huile sous pression, par l'intermédiaire d'au moins un conduit d'alimentation (34 ; 35), les consommateurs hydrauliques (24, 23) du groupe d'injection, ainsi qu'une unité de régulation (E1) qui est logée dans le conduit d'alimentation (34 ; 35), présente une valve de pression (4) à débit proportionnel et une sonde de pression (5) pour la régulation en fonction de la pression (régulation de pression programmée), et à laquelle est associé un conduit de retour de commande (43) reliant l'organe régulateur (2a) de la pompe régulatrice (2) au conduit d'alimentation, après la valve de pression (4) à débit proportionnel, en vue d'entretenir une chute constante de la pression de service, caractérisé par le fait qu'une seconde unité de régulation (E2, E2'') est branchée en aval de la première unité de régulation (E1) quant à son allure de régulation caractéristique, du fait que la vitesse de régulation de la seconde unité de régulation (E2, E2'') est déterminée par l'ampleur de la chute de la pression de service de la première unité de régulation (E1), ladite seconde unité de régulation (E2, E2'') englobant une valve de pression (18, 18') à débit proportionnel, une sonde de pression (17) pour la régulation en fonction de la pression (régulation de pression programmée), ainsi qu'un convertisseur (22) de tension de déplacement pour la régulation en fonction de la course (régulation de débit programmée).

2. Dispositif selon la revendication 1, caractérisé par le fait qu'un accumulateur hydraulique (29) associé à un capteur de pression (28) peut être ajouté, si besoin est au moyen d'un distributeur (27), entre la première unité de régulation (E1), reliée à la pompe régulatrice (2) par l'intermédiaire du conduit de retour de commande (43), et la seconde unité de régulation (E2).

3. Dispositif selon l'une des revendications 1 ou 2, caractérisé par le fait que les chambres cylindriques (37, 38) des vérins (vérin d'injection 24 ; vérin de rappel 25), provoquant l'avance (injection de la matière plastique) et le recul de la vis sans fin de convoyage (40), peuvent être raccordées l'une à l'autre au moyen d'un distributeur (33).

4. Dispositif selon l'une des revendications précédentes, caractérisé par le fait qu'une seconde unité de régulation (E2', E2, E2") est branchée en aval de l'unité de régulation (E1), tant dans le conduit d'alimentation (35) gagnant le vérin (vérin de déplacement 23) pour la montée et la descente du groupe d'injection, que dans le conduit d'alimentation (34) menant au vérin d' injection (24), un distributeur (15) étant branché en aval de ladite unité dans le conduit d'alimentation (36) menant au vérin de rappel (25).

5. Dispositif selon l'une des revendications précédentes, caractérisé par le fait qu'un distributeur (16) est branché en aval de l'unité de régulation (E1), dans le conduit d'alimentation (39) menant au moteur à huile (19) équipant la vis sans fin de convoyage (40).

6. Dispositif de commande selon l'une des revendications précédentes, caractérisé par la présence d'une pompe régulatrice supplémentaire à moindre capacité de refoulement (pompe 12 de maintien de pression), par laquelle le vérin de déplacement (23) peut être alimenté par l'intermédiaire d'une valve (8) d'inversion de commande et de la seconde unité de régulation (E2').

7. Dispositif selon l'une des revendications précédentes, caractérisé par le fait que la montée et la descente du groupe d'injection sont réglables sélectivement par l'intermédiaire de la première (E1) ou de la seconde unité de régulation (E2'); et par le fait que, dans le cas où le réglage a lieu par l'intermédiaire de la seconde unité de régula tion (E2'), le vérin de déplacement (23) peut être sélectivement alimenté par l'intermédiaire de la pompe régulatrice (2), ou de la pompe (12) de maintien de pression.

8. Dispositif selon l'une des revendications précédentes, caractérisé par le fait que, au cours de l'injection de la matière plastique et de la phase consécutive de maintien en pression, en vue d'introduire ultérieurement sous pression la matière plastique dans le moule de coulée par injection, l'accumulateur hydraulique (29) est sélectivement rechargeable par la pompe régulatrice (2), par l'intermédiaire de la première unité de régulation (E1) et du distributeur (27), ou bien par une pompe (12) de maintien de pression, par l'intermédiaire d'une valve (32) d'admission additionnelle de pression, voire simultanément par la pompe régulatrice (2) et la pompe (12) de maintien de pression.

Fig. 1

Fig.2

EP 0 185 984 B1